# EUROPEAN PATENT APPLICATION

(11) **EP 4 593 408 A1**
(43) Date of publication of application: **30.07.2025**
(21) Application number: 23894969.7
(22) Date of filing: 20.11.2023
(51) Int. Cl.: H04N 23/68, H04N 23/55, H04N 23/54, G03B 5/04, G03B 3/10, G03B 17/02, F16F 1/36, G03B 13/36

(54) **CAMERA MODULE AND ELECTRONIC DEVICE COMPRISING SAME**

(30) Priority: 23.11.2022 KR 20220158054; 09.12.2022 KR 20220171644
(71) Applicant: Samsung Electronics Co., Ltd., Suwon-si, Gyeonggi-do 16677 (KR)
(72) Inventor: MOON, Chanyoung, Suwon-si Gyeonggi-do 16677 (KR)
(74) Representative: Nederlandsch Octrooibureau
(86) International application number: PCT/KR2023/018691
(87) International publication number: WO 2024/112041

(57) **Abstract**

According to an embodiment of the present disclosure, a camera module and/or an electronic device comprising same may comprise: a first carrier configured to perform an image stabilization operation, a second carrier disposed on the first carrier so as to horizontally move with regard to the image sensor together with at least a part of the first carrier, the second carrier being configured to move along the optical axis direction with regard to the first carrier, thereby performing a focal point adjusting operation; and at least one elastic member configured to connect the second carrier to the first carrier and to support or guide movements of the second carrier with regard to the first carrier. In an embodiment, the elastic member may comprise: a first holding portion supported on the first carrier; a first elastic portion extending from the first holding portion; a second holding portion provided on an end of the first elastic portion and supported on the second carrier; at least one second elastic portion extending from the first elastic portion between the first and second holding portions; and a third holding portion provided on an end of the second elastic portion and supported on the first carrier. Various other embodiments may also be possible.

## Description

### [Technical Field]

The embodiments of the disclosure relate to an electronic device, for example, a camera module and/or an electronic device including the same.

### [Background Art]

As electronic, information and communication technologies have developed, various functions have come to be integrated into a single electronic device. For example, a smartphone may include functions of a sound playback device, an imaging device, or a digital diary, in addition to a communication function, and more diverse functions may be implemented in a smartphone through installation of additional applications. An electronic device may be provided with various pieces of information in real time by accessing a server or another electronic device in a wired or wireless manner as well as by executing an installed application or a stored file.

As various functions are implemented in single electronic devices (e.g., smartphones), electronic devices such as sound playback devices performing a specific function have already been replaced by smartphones, and the areas of video playback devices or imaging devices are also gradually being replaced by smartphones. In a miniaturized electronic device, since optical performances may be limited, it is possible to enhance the quality of captured images or videos by implementing an imaging function using a plurality of cameras or a plurality of image sensors. For example, electronic devices such as smartphones are replacing compact cameras, and it is expected that the electronic devices may replace high-performance cameras such as single-lens reflex cameras in the future.

The above-described information may be provided as related art for the purpose of assisting in understanding the disclosure. None of the above contents make an assertion or decision as to whether any of the above might be applicable as prior art with regard to the disclosure.

### [Detailed Description of the Invention]

### [Technical Solution]

According to an embodiment of the disclosure, a camera module and/or an electronic device including the same may include an image sensor configured to receive light incident along the optical axis and to generate an electrical signal. In an embodiment, the camera module and/or the electronic device including the same may include a first carrier configured to move at least partially horizontally with respect to the image sensor on a plane perpendicular to the optical axis. In an embodiment, the camera module and/or the electronic device including the same may include a second carrier disposed on the first carrier, configured to move horizontally together with at least a portion of the first carrier relative to the image sensor, and configured to move along the optical axis relative to the first carrier. In an embodiment, the camera module and/or the electronic device including the same may include a lens array disposed on the second carrier and configured to move along the optical axis relative to the first carrier together with the second carrier and to guide or focus light incident along the optical axis onto the image sensor. In an embodiment, the camera module and/or the electronic device including the same may include at least one elastic member connecting the second carrier to the first carrier and configured to support or guide movement of the second carrier relative to the first carrier. In an embodiment, the elastic member may include a first fixing portion supported by the first carrier. In an embodiment, the elastic member may include a first elastic portion extending from the first fixing portion. In an embodiment, the elastic member may include a second fixing portion provided at an end portion of the first elastic portion and supported by the second carrier. In an embodiment, the elastic member may include at least one second elastic portion extending from the first elastic portion between the first fixing portion and the second fixing portion. In an embodiment, the elastic member may include a third fixing portion provided at an end portion of the second elastic portion and supported by the first carrier.

According to an embodiment of the disclosure, the electronic device may include the above-described camera module and a processor configured to acquire a subject image using the camera module.

According to an embodiment of the disclosure, the electronic device may include the above-described camera module, a processor, and memory configured to store instructions. In an embodiment, the instructions may be configured to cause the electronic device to acquire a subject image using the camera module when executed by the processor.

### [Brief Description of Drawings]

The above and other aspects, features, and/or advantages of an embodiment of the disclosure will be more apparent from the following detailed description taken with reference to the accompanying drawings.
FIG. 1 is a block diagram illustrating an electronic device in a network environment according to an embodiment of the disclosure.
FIG. 2 is a front perspective view of an electronic device according to an embodiment of the disclosure.
FIG. 3 is a rear perspective view of the electronic device according to an embodiment of the disclosure illustrated in FIG. 2.
FIG. 4 is a front exploded perspective view illustrating the electronic device according to an embodiment illustrated in the disclosure of FIG. 2.
FIG. 5 is a rear exploded perspective view illustrating the electronic device according to an embodiment of the disclosure illustrated in FIG. 2.
FIG. 6 is an exploded perspective view illustrating a camera module of an electronic device according to an embodiment of the disclosure.
FIG. 7 is a perspective view illustrating the assembled camera module cut along line A-A' of FIG. 6, according to an embodiment of the disclosure.
FIG. 8 is a view illustrating one or more elastic members of the camera module according to an embodiment of the disclosure.
FIG. 9 is a perspective view illustrating a state in which the one or more elastic members are disposed on a first carrier of the camera module according to an embodiment of the disclosure.
FIG. 10 is a view illustrating a state in which a second carrier is disposed on the first carrier via the one or more elastic members of the camera module according to an embodiment of the disclosure.
FIG. 11 is a perspective view illustrating the first carrier and/or the one or more elastic members cut along line B-B' of FIG. 10, according to an embodiment of the disclosure.
FIG. 12 is a view illustrating the first carrier and/or the one or more elastic members cut along line B-B' of FIG. 10, according to an embodiment of the disclosure.
FIG. 13 is a perspective view illustrating a state in which the one or more elastic members are disposed on the first carrier of the camera module according to an embodiment of the disclosure.
FIG. 14 is a cutaway perspective view illustrating the first carrier and/or the one or more elastic members of FIG. 13 according to an embodiment of the disclosure.
FIG. 15 is a view illustrating a state in which the second carrier is disposed on the first carrier via the one or more elastic members of the camera module according to an embodiment of the disclosure.
FIG. 16 is a cutaway perspective view illustrating the first carrier and/or the one or more elastic members of FIG. 15 according to an embodiment of the disclosure.
FIG. 17 is a view illustrating a state in which a second carrier is disposed on the first carrier via the one or more elastic members of the camera module according to an embodiment of the disclosure.
FIG. 18 is a cutaway perspective view illustrating the first carrier and/or the one or more elastic members before one or more damping members are disposed on the first carrier of FIG. 17, according to an embodiment of the disclosure.
FIG. 19 is a cutaway perspective view illustrating the first carrier and/or the one or more elastic members of FIG. 17 according to an embodiment of the disclosure.
FIG. 20 is a cutaway perspective view illustrating the first carrier and/or the one or more elastic members before one or more damping members are disposed on the first carrier of a camera module according to an embodiment of the disclosure.
FIG. 21 is a cutaway perspective view illustrating the first carrier and/or the one or more elastic members of a camera module according to an embodiment of the disclosure.

Throughout the appended drawings, like reference numerals may be assigned to like components, configurations, and/or structures.

### [Mode for Carrying out the Invention]

As compact and portable electronic devices such as smartphones and tablet PCs become widespread, user demands for the price and performance of electronic devices may increase. By appropriately combining an image sensor and one or more lenses, implementing a stable focusing operation, and/or processing the acquired image data, the optical performance of a camera module and/or an electronic device may be stabilized or improved. Recently, with the incorporation of an optical image stabilization function capable of preventing image quality degradation caused by a user's hand tremors or the like, the quality of images acquired by the camera module and/or electronic device may be further enhanced. The optical image stabilization function may be implemented through a mechanical operation that moves (or vibrates) one or more lenses relative to the image sensor. As the camera module and/or electronic device becomes more compact, the precision of various components may increase, and the assembly process may become more complex when implementing a mechanical structure for the optical image stabilization operation. For example, while the incorporation of the optical image stabilization function may enhance the quality of images acquired by the camera module and/or the electronic device, it may also increase manufacturing costs and/or user purchase costs.

An embodiment of the disclosure is intended to at least address the above-described problems and/or disadvantages and to at least provide the advantages described below, and may provide a camera module capable of acquiring high-quality images while suppressing an increase in manufacturing or purchase costs and/or an electronic device including the same.

An embodiment of the disclosure may provide a camera module having a simple structure while incorporating an optical image stabilization function and/or a focusing function and/or an electronic device including the same.

The technical subjects pursued in the disclosure may not be limited to the above-mentioned technical subjects, and other technical subjects which are not mentioned may be clearly understood from the following descriptions by those skilled in the art to which the disclosure pertains.

The following description made with reference to the accompanying drawings may provide an understanding of various exemplary implementations of the disclosure including the claims and equivalents thereof. An exemplary embodiment set forth in the following description includes various particular details to help the understanding, but is considered one of various exemplary embodiments. Therefore, it will be apparent to those skilled in the art that various changes and modifications may be made to various implementations described herein without departing from the scope and technical idea of the disclosure. In addition, descriptions of well-known functions and configurations may be omitted for clarity and brevity.

The terms and words used in the following description and claims are not limited to bibliographical meanings, but may be used to clearly and consistently describe the various embodiments set forth herein. Therefore, it will be apparent to those skilled in the art that the following description of various implementations of the disclosure is provided only for the purpose of explanation, rather than for the purpose of limiting the disclosure defined as the scope of protection and equivalents thereto.

It should be appreciated that a singular form such as "a," "an," or "the" also includes the meaning as a plural form, unless the context clearly indicates otherwise. Therefore, for example, "a component surface" may mean one or more of component surfaces.

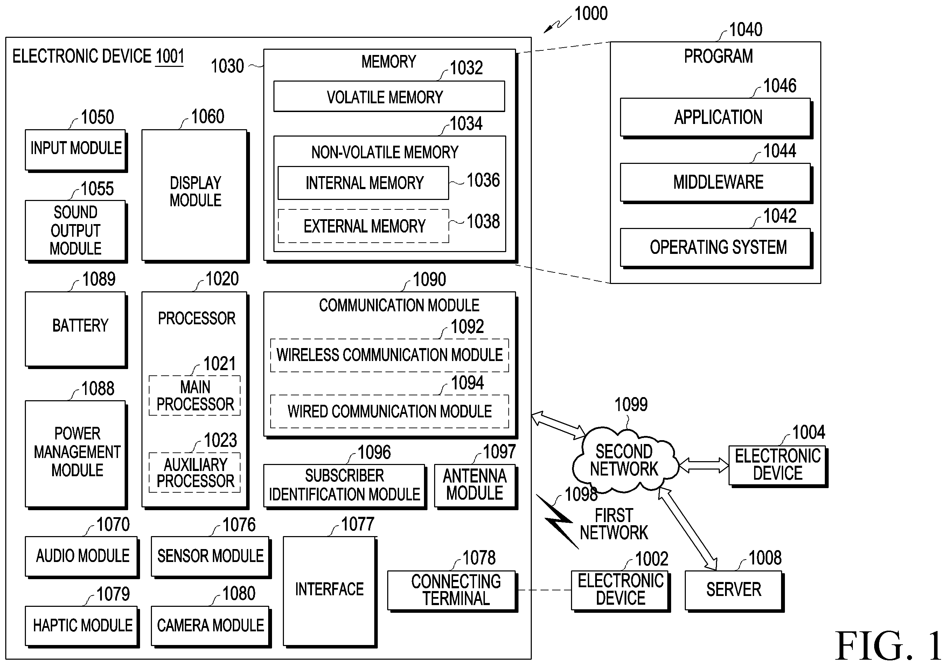

FIG. 1 is a block diagram illustrating an electronic device 1001 in a network environment 1000 according to various embodiments. Referring to FIG. 1, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

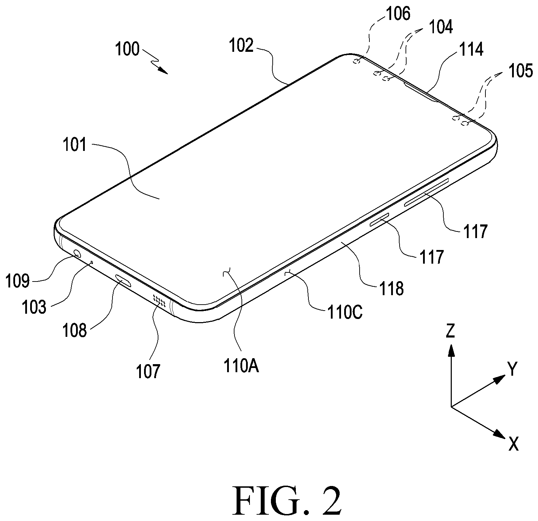

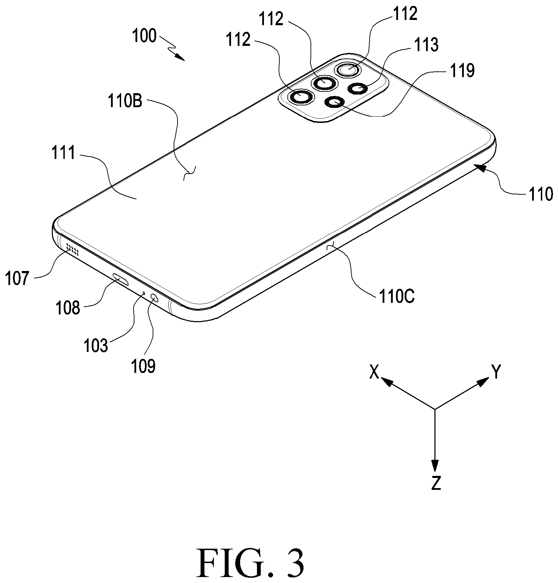

FIG. 2 is a front perspective view of an electronic device 100 according to an embodiment of the disclosure. FIG. 3 is a rear perspective view of the electronic device 100 of FIG. 2 according to an embodiment of the disclosure.

Referring to FIGS. 2 and 3, the electronic device 100 (e.g., the electronic device 1001 in FIG. 1) according to an embodiment may include a housing 110 including a first surface (or the front surface) 110A, a second surface (or the rear surface) 110B, and a side surface 110C surrounding the space between the first surface 110A and the second surface 110B. In an embodiment (not illustrated), the housing 110 may refer to a structure that forms a portion of the first surface 110A of FIG. 2, and the second surface 110B and the side surface 110C of FIG. 3. According to an embodiment, at least a portion of the first surface 110A may be made of a substantially transparent front surface plate 102 (e.g., a glass plate or a polymer plate including various coating layers). The second surface 110B may be made of a substantially opaque rear surface plate 111. The rear surface plate 111 may be made of, for example, coated or colored glass, ceramic, polymer, metal (e.g., aluminum, stainless steel (STS), or magnesium), or a combination of two or more of these materials. The side surface 110C may be defined by the side surface structure (or a "side surface bezel structure") 118 coupled to the front surface plate 102 and the rear surface plate 111 and including metal and/or polymer. In an embodiment, the rear surface plate 111 and the side surface structure 118 may be integrated with each other and may include the same material (e.g., a metal material such as aluminum).

Although not illustrated, the front surface plate 102 may include one or more areas that are curved and extend seamlessly from at least a portion of an edge toward the rear surface plate 111. In an embodiment, the front surface plate 102 (or the rear surface plate 111) may include only one of the areas bent and extending toward the rear surface plate 111 (or the front surface plate 102), at one side edge of the first surface 110A. According to an embodiment, the front surface plate 102 or the rear surface plate 111 may have a substantially flat plate shape, and in this case, may not include a bent and extending area. When the bent and extending area is included, the thickness of the electronic device 100 in the portion including the bent and extending area may be smaller than the thicknesses of other portions.

According to an embodiment, the electronic device 100 may include at least one of a display 101, an audio module (e.g., a microphone hole 103, an external speaker hole 107, and a call receiver hole 114), a sensor module (e.g., a first sensor module 104, a second sensor module (not illustrated), and a third sensor module 119), a camera module (e.g., a first camera device 105, a second camera device 112, and a flash 113), key input devices 117, a light-emitting element 106, and connector holes (e.g., a first connector hole 108 and a second connector hole 109). In an embodiment, in the electronic device 100, at least one of the components (e.g., the key input devices 117 or the light-emitting element 106) may be omitted, or other components may be additionally included.

The display 101 may output a screen or may be visually exposed through, for example, a significant portion of the first surface 110A (e.g., the front surface plate 102). In an embodiment, at least a portion of the display 101 may be visually exposed through the front surface plate 102 forming the first surface 110A or through a portion of the side surface 110C. In an embodiment, the edge of the display 101 may be formed to be substantially the same as the shape of the periphery of the front surface plate 102 adjacent thereto. In an embodiment (not illustrated), the distance between the periphery of the display 101 and the periphery of the front surface plate 102 may be substantially constant in order to enlarge the visually exposed area of the display 101.

In an embodiment (not illustrated), recesses or openings may be provided in some portions of the screen display area of the display 101, and one or more of an audio module (e.g., the call receiver hole 114), a sensor module (e.g., the first sensor module 104), a camera module (e.g., the first camera module 105), and a light-emitting element 106 may be aligned with the recesses or the openings. In an embodiment (not illustrated), the rear surface of the screen display area of the display 101 may include at least one of an audio module (e.g., the call receiver hole 114), a sensor module (e.g., the first sensor module 104), a camera module (e.g., the first camera device 105), a fingerprint sensor (not illustrated), and a light-emitting element 106. In an embodiment (not illustrated), the display 101 may be coupled to or disposed adjacent to a touch-sensitive circuit, a pressure sensor capable of measuring a touch intensity (pressure), and/or a digitizer configured to detect an electromagnetic field-type stylus pen. In an embodiment, when the front surface plate 102 or the rear surface plate 111 includes the curved and extended area(s), at least a portion of the sensor modules (e.g., the first sensor module 104 and the third sensor module 119), and/or at least a portion of the key input devices 117 may be arranged in the curved and extended area(s).

The audio module 103, 107, and 114 may include a microphone hole 103 and speaker holes (e.g., the external speaker hole 107 and the call receiver hole 114). A microphone configured to acquire external sound may be placed inside the microphone hole 103, and in an embodiment, a plurality of microphones may be placed to detect the direction of sound. The speaker holes may include an external speaker hole 107 and a call receiver hole 114. In an embodiment, the speaker holes (e.g., the external speaker hole 107 and the call receiver hole 114) and the microphone hole 103 may be implemented as a single hole, or a speaker may be included without the speaker holes (e.g., the external speaker hole 107 and the call receiver hole 114) (e.g., a piezo speaker).

The sensor modules may generate electrical signals or data values corresponding to the internal operating states or the external environmental states of the electronic device 100. The sensor modules may include, for example, a first sensor module 104 (e.g., a proximity sensor) and/or a second sensor module (not illustrated) (e.g., a fingerprint sensor) disposed on the first surface 110A of the housing 110, and/or a third sensor module 119 disposed on the second surface 110B of the housing 110. The second sensor module (not illustrated) (e.g., a fingerprint sensor) may be disposed not only on the first surface 110A (e.g., the display 101) of the housing 110, but also on the second surface 110B or the side surface 110C of the housing 110. The electronic device 100 may further include at least one of, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules may include a first camera device 105 disposed on the first surface 110A of the electronic device 100, and a second camera device 112 and/or a flash 113 disposed on the second surface 110B of the electronic device 100. The camera devices (e.g., the first camera device 105 and the second camera device 112) may include one or more lenses, an image sensor, and/or an image signal processor. The flash 113 may include, for example, a light-emitting diode or a xenon lamp. In an embodiment, one or more lenses (e.g., an infrared camera lens, a wide-angle lens, and a telephoto lens) and image sensors may be disposed on one surface of the electronic device 100. In an embodiment, the flash 113 may emit infrared rays, and the infrared light emitted by the flash 113 and reflected by a subject may be received through the third sensor module 119. The electronic device 100 or the processor (e.g., the processor 1020 in FIG. 1) of the electronic device 100 may detect depth information of the subject based on a time point when the infrared rays are received by the third sensor module 119.

The key input devices 117 may be disposed on the side surface 110C of the housing 110. In an embodiment, the electronic device 100 may not include some or all of the above-mentioned key input devices 117, and key input devices 117, which are not included, may be implemented in another form, such as soft keys, on the display 101. In an embodiment, the key input devices may include a sensor module disposed on the second surface 110B of the housing 110.

The light-emitting element 106 may be disposed on, for example, the first surface 110A of the housing 110. The light-emitting element 106 may provide, for example, the state information of the electronic device 100 in an optical form. In an embodiment, the light-emitting element 106 may provide a light source that is linked to the operation of, for example, a camera module (e.g., the first camera device 105). The light-emitting element 106 may include, for example, an LED, an IR LED, and a xenon lamp.

The connector holes (e.g., a first connector hole 108 and a second connector hole 109) may include a first connector hole 108, which is capable of accommodating a connector (e.g., a USB connector) configured to transmit/receive power and/or data to/from an external electronic device (e.g., the electronic device 1002 in FIG. 1), and/or a second connector hole (e.g., an earphone jack) 109, which is capable of accommodating a connector for transmitting/receiving an audio signal to/from an external electronic device.

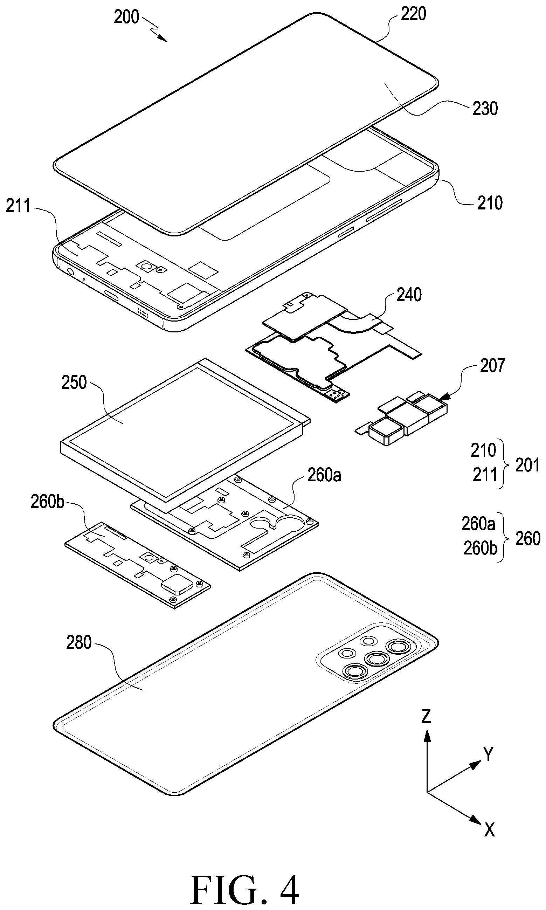

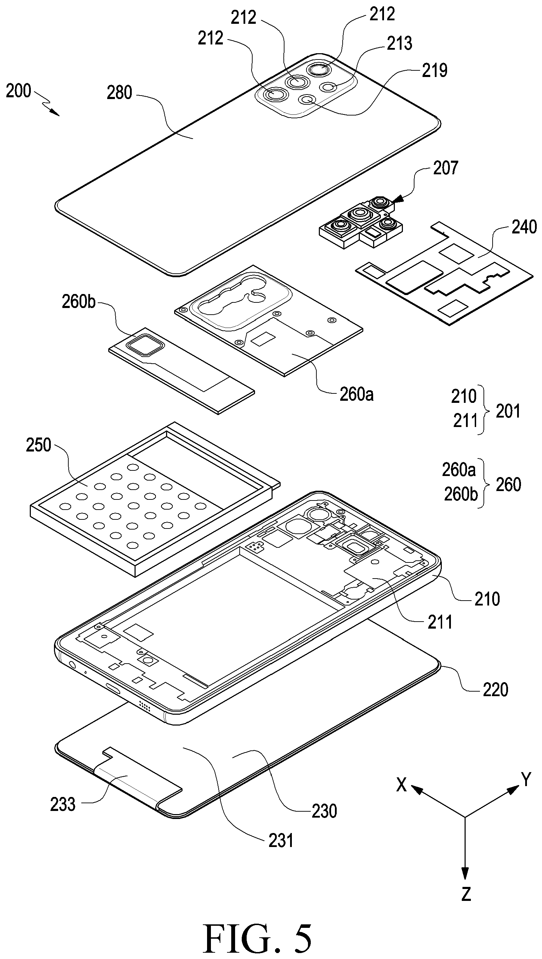

FIG. 4 is a front exploded perspective view illustrating the electronic device 200 according to an embodiment illustrated in the disclosure of FIG. 2. FIG. 5 is a rear exploded perspective view illustrating the electronic device 200 according to an embodiment illustrated in the disclosure of FIG. 2.

Referring to FIGS. 4 and 5, the electronic device 200 (e.g., the electronic device 1001, 1002, 1004, or 100 in FIG. 1, FIG. 2, or FIG. 3) may include a side surface structure 210, a first support member 211 (e.g., a bracket), a front surface plate 220 (e.g., the front surface plate 102 in FIG. 2), a display 230 (e.g., the display 101 in FIG. 2), a printed circuit board (or a substrate assembly) 240, a battery 250, a second support member 260 (e.g., a rear case), an antenna, a camera assembly 207, and a rear surface plate 280 (e.g., the rear surface plate 111 in FIG. 3). In an embodiment, in the electronic device 200, at least one of the components (e.g., the first support member 211 or the second support member 260) may be omitted, or other components may be additionally included. At least one of the components of the electronic device 200 may be the identical or similar to at least one of the components of the electronic device 100 of FIG. 2 or 3, and a redundant description thereof will be omitted below.

The first support member 211 may be arranged inside the electronic device 200 to be connected to the side surface structure 210 or may be integrated with the side surface structure 210. The first support member 211 may be made of, for example, a metal material and/or a non-metal (e.g., polymer) material. When at least partially being made of a metal material, a portion of the side surface structure 210 or the first support member 211 may serve as an antenna. The first support member 211 may include one surface to which the display 230 is coupled and the other surface to which the printed circuit board 240 is coupled. A processor (e.g., the processor 1020 in FIG. 1), memory (e.g., the memory 1030 in FIG. 1), and/or an interface (e.g., the interface 1077 in FIG. 1) may be mounted on the printed circuit board 240. The processor may include one or more of, for example, a central processing unit, an application processor, a graphics processing unit, an image signal processor, a sensor hub processor, or a communication processor.

According to various embodiments, the first support member 211 and the side surface structure 210 may be combined to be referred to as a front case or a housing 201. According to an embodiment, the housing 201 may be generally understood as a structure for accommodating, protecting, or disposing the printed circuit board 240 or the battery 250. In an embodiment, it may be understood that the housing 201 includes structures capable of being visually or tactfully recognized by a user in the exterior of the electronic device 200, such as the side surface structure 210, the front surface plate 220, and/or the rear surface plate 280. In an embodiment, the "front surface or rear surface of the housing 201" may be understood as the first surface 110A in FIG. 2 or the second surface 110B in FIG. 3. In an embodiment, the first support member 211 may be disposed between the front surface plate 220 (e.g., the first surface 110A in FIG. 2) and the rear surface plate 280 (e.g., the second surface 110B in FIG. 3) and may serve as a structure on which electrical/electronic components, such as a printed circuit board 240 or a camera assembly 207, are arranged.

The display 230 may include a display panel 231 and a flexible printed circuit board 233 extending from the display panel 231. The flexible printed circuit board 233 may be understood, for example, to be electrically connected to the display panel 231 while being disposed at least partially on the rear surface of the display panel 231. In an embodiment, reference number '231' may be understood as denoting a protective sheet disposed on the rear surface of the display panel. For example, unless otherwise classified in the following detailed description, the protective sheet may be understood as being a portion of the display panel 231. In an embodiment, the protective sheet may function as a buffer structure (e.g., a low-density elastic material such as a sponge) absorbing an external force or an electromagnetic shield structure (e.g., a copper sheet (CU sheet)). According to an embodiment, the display 230 may be disposed on the inner surface of the front surface plate 220 and may include a light-emitting layer to output a screen through at least a portion of the first surface 110A of FIG. 2 or the front surface plate 220. As mentioned above, the display 230 may output a screen through substantially the entire area of the first surface 110A of FIG. 2 or the front surface plate 220.

The memory may include, for example, volatile memory or non-volatile memory.

The interface may include, for example, a high-definition multimedia interface (HDMI), a universal serial bus (USB) interface, an SD card interface, and/or an audio interface. For example, the interface may electrically or physically connect the electronic device 200 to an external electronic device, and include a USB connector, an SD card/MMC connector, or an audio connector.

The second support member 260 may include, for example, an upper support member 260a and a lower support member 260b. In an embodiment, the upper support member 260a may be arranged to surround the printed circuit board 240 together with a portion of the first support member 211. A circuit device implemented in the form of an integrated circuit chip (e.g., a processor, a communication module, or memory) or various electrical/electronic components may be disposed on the printed circuit board 240, and in some embodiments, the printed circuit board 240 may be provided with an electromagnetically shielded environment from the upper support member 260a. In an embodiment, the lower support member 260b may be used as a structure on which electric/electronic components, such as a speaker module and an interface (e.g., a USB connector, an SD card/MMC connector, or an audio connector), are arranged. In an embodiment, electrical/electronic components, such as a speaker module and an interface (e.g., a USB connector, an SD card/MMC connector, or an audio connector), may be disposed on an additional printed circuit board (not illustrated). In this case, the lower support member 260b may be disposed to enclose the additional printed circuit board together with the other portion of the first support member 211. The speaker module or interface disposed on the additional printed circuit board (not illustrated) or the lower support member 260b may be arranged to correspond to the audio module of FIG. 2 (e.g., the microphone hole 103 or the speaker holes (e.g., the external speaker hole 107 and the call receiver hole 114)) or the connector holes (e.g., the first connector hole 108 and the second connector hole 109).

The battery 250 is a device for supplying power to at least one of the components of the electronic device 200 and may include, for example, a non-rechargeable primary battery, a rechargeable secondary battery, or a fuel cell. At least a portion of the battery 250 may be disposed on substantially the same plane as, for example, the printed circuit board 240. The battery 250 may be integrally disposed inside the electronic device 200, or may be disposed to be detachable from the electronic device 200.

Although not illustrated, the antenna may include a conductor pattern implemented on the surface of the second support member 260 through, for example, a laser direct structuring (LDS) method. In an embodiment, the antenna may include a printed circuit pattern provided on the surface of a thin film, and the thin film-type antenna may be disposed between the rear surface plate 280 and the battery 250. The antenna may include, for example, a near-field communication (NFC) antenna, a wireless charging antenna, and/or a magnetic secure transmission (MST) antenna. The antenna may, for example, perform short-distance communication with an external device, or wirelessly transmit and receive power required for charging. In an embodiment, an antenna structure may be configured with a portion or a combination of the side surface structure 210 and/or the first support member 211.

The camera assembly 207 may include at least one camera module. Inside the electronic device 200, the camera assembly 207 may receive at least some of light incident through optical holes or camera windows 212, 213, and 219. In an embodiment, the camera assembly 207 may be disposed on the first support member 211 at a position adjacent to the printed circuit board 240. In an embodiment, the camera modules of the camera assembly 207 may be generally aligned with one of the camera windows 212, 213, and 219, and may be at least partially surrounded by the second support member 260 (e.g., the upper support member 260a).

In FIGS. 2 to 5, which illustrate the above-described electronic device 200, the X-axis, the Y-axis, and the Z-axis are illustrated for the sake of conciseness in explaining one or more directions referenced in the embodiments described below. For example, the orthogonal coordinate system in the embodiment of FIG. 2 to FIG. 5 and/or the embodiments described below are provided for ease of explanation. Depending on the structure and specifications of an actually manufactured electronic device or a user's usage habits, the orthogonal coordinate system may be defined differently from what is illustrated in the drawings.

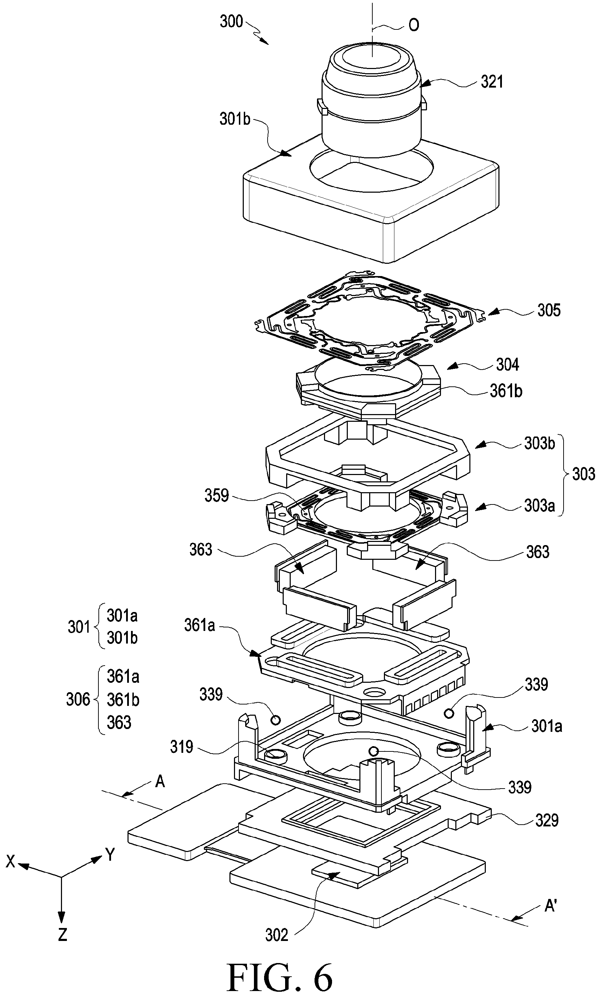

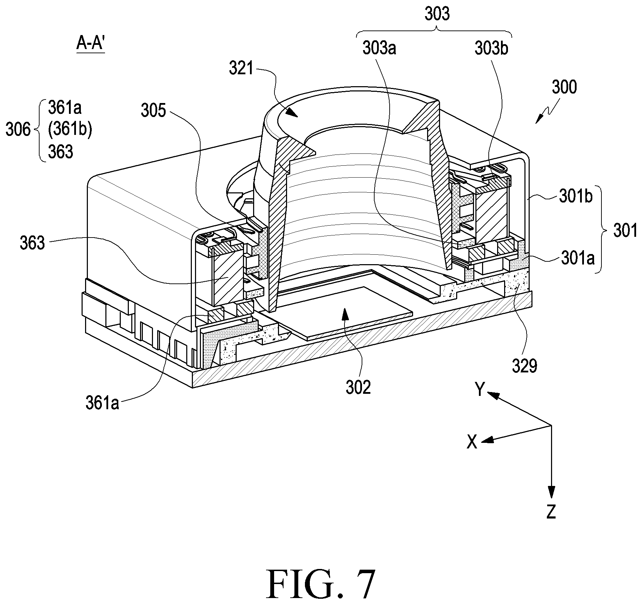

FIG. 6 is an exploded perspective view illustrating a camera module 300 of an electronic device (e.g., the electronic device 1001, 1002, 1004, 100, or 200 in FIGS. 1 to 5), according to an embodiment of the disclosure. FIG. 7 is a perspective view illustrating the assembled camera module 300 cut along line A-A' of FIG. 6, according to an embodiment of the disclosure.

Referring to FIG. 6 and FIG. 7, the camera module 300 (e.g., at least one of the camera modules included in the camera assembly 207 of FIG. 4 or 5) and/or an electronic device 200 including the same may include an image sensor 302, a first carrier 303 for an optical image stabilization operation, a second carrier 304 for a focusing operation, a lens array 321 including at least one lens, and/or an elastic member 305 connecting the first carrier 303 and the second carrier 304. In an embodiment, the elastic member 305 may be configured to support or guide the movement of the second carrier 304 along the optical axis O relative to the first carrier 303. In an embodiment, the lens array 321 may guide or focus light incident along the optical axis O onto the image sensor 302. In an embodiment, due to the optical image stabilization operation of the first carrier 303, the second carrier 304 and/or the lens array 321 may move relative to the image sensor 302 on a plane substantially perpendicular to the optical axis O. In an embodiment, due to the focusing operation of the second carrier 304, the lens array 321 may move along the optical axis O.

According to an embodiment, the camera module 300 and/or an electronic device 200 including the same may further include a casing 301 and/or a driver 306. The casing 301 may be a component that at least partially accommodates the image sensor 302, the first carrier 303, the second carrier 304, and/or the lens array 321. The casing 301 may provide a mechanical structure for disposing the image sensor 302, the first carrier 303, the second carrier 304, and/or the lens array 321, or provide an electromagnetic shielding environment. For example, the casing 301 may include a first casing 301a that provides a structure for mounting the image sensor 302 or the first carrier 303, and a second casing 301b coupled to the first casing 301a to at least partially surround the first carrier 303, the second carrier 304, and/or the lens array 321. The second casing 301b may function, for example, as an electromagnetic shielding structure.

According to an embodiment, the driver 306 may include a voice coil motor (VCM) in which one or more coils 361a and 361b are combined with one or more magnets 363, and may generate electromagnetic force when an electrical signal is applied to the coils 361a and 361b. For example, the driver 306 may receive an electrical signal and may provide a driving force to move the first carrier 303 or the second carrier 304. The "movement of the first carrier 303" may be understood as movement relative to the image sensor 302, for example, in an optical image stabilization operation while the "movement of the second carrier 304" may be understood as movement relative to the image sensor 302 and/or the first carrier 303, for example, in a focusing operation. For example, due to the driving force generated by the driver 306, the first carrier 303 may move horizontally on a plane substantially perpendicular to the optical axis O (or on a plane parallel to the XY plane), and the second carrier 304 may reciprocate along the optical axis O relative to the first carrier 303. As such, the driver 306 may generate driving forces acting in a plurality of different directions.

In the illustrated embodiment, among the components of the driver 306, four first coils 361a and four magnets 363 may be combined to provide a driving force for moving the first carrier 303 in the X-axis direction and/or a driving force for moving the first carrier 303 in the Y-axis direction, while the second coil 361b and four magnets 363 may be combined to provide a driving force for moving the second carrier 304 in the Z-axis direction. For example, the one or more first coils 361a may be substantially disposed on the casing 301 (e.g., the first casing 301a), the magnets 363 may be disposed on the first carrier 303, and the second coil 361b may be disposed on the second carrier 304. In an embodiment, as an electrical signal is applied to the one or more first coils 361a, the first carrier 303 may move horizontally on the casing 301. In an embodiment, as an electrical signal is applied to the second coil 361b, the second carrier 304 may reciprocate along the optical axis O on the first carrier 303. As such, due to the driving force provided by the driver 306 (e.g., the one or more first coils 361a and the one or more magnets 363), the first carrier 303 may move horizontally relative to the casing 301 and/or the image sensor 302 substantially parallel to the XY plane. In an embodiment, due to the driving force provided by the driver 306 (e.g., the second coil 361b and the one or more magnets 363), the second carrier 304 may reciprocate along the optical axis O relative to the image sensor 302 and/or the first carrier 303.

According to an embodiment, the image sensor 302 may be disposed on one surface of the casing 301 (e.g., the first casing 301a) via a bracket 329. In an embodiment, the image sensor 302 may be disposed substantially on the bottom surface of the casing 301, and an active area that receives external light may be visually exposed inside the casing 301. In an embodiment, the camera module 300 and/or an electronic device 200 including the same (e.g., the processor 1020 in FIG. 1) may perform an optical image stabilization operation and/or an autofocusing operation by moving the first carrier 303, the second carrier 304, and/or the lens array 321 relative to the image sensor 302. For example, the processor 1020 may apply an electrical signal to the driver 306 based on an external force or vibration detected through the sensor module 1076 in FIG. 1, and the driver 306 may perform an optical image stabilization operation and/or an autofocusing operation by generating a driving force in response to the applied electrical signal.

According to an embodiment, the optical image stabilization operation and/or the autofocusing operation may be implemented as software (e.g., a program) including one or more instructions stored in a storage medium (e.g., the memory 1300 in FIG. 1) of an electronic device (e.g., the electronic device 1001, 100, or 200 in FIG. 1 to FIG. 5). For example, the processor (e.g., the processor 120 in FIG. 1) may retrieve at least one instruction from among one or more instructions stored in the storage medium (e.g., the memory 1300 in FIG. 1) and execute the instruction, thereby causing the electronic device (and/or the camera module 300) to perform the optical image stabilization operation and/or the autofocusing operation.

According to an embodiment, one or more elastic members 305 may mechanically connect the first carrier 303 and the second carrier 304 while supporting or guiding the movement of the second carrier 304 along the optical axis O relative to the first carrier 303 in the autofocusing operation. In an embodiment, the one or more elastic members 305 may mechanically connect the first carrier 303 to the casing 301 (e.g., the first casing 301a) while supporting or guiding the horizontal movement of the first carrier 303 relative to the casing 301 in the optical image stabilization operation.

According to an embodiment, the first carrier 303 may include a first guide member 303a and a second guide member 303b. This may provide a structure that facilitates placement or assembly of the second carrier 304 inside the first carrier 303. For example, by further including a second elastic member 359, the camera module 300 may more stably support the reciprocating movement of the second carrier 304. In an embodiment, when placing the second carrier 304 using the second elastic member 359, the inclusion of the first guide member 303a and the second guide member 303b in the first carrier 303 may facilitate the placement of the second carrier 304 inside the first carrier 303. In an embodiment, when the structure is capable of stabilizing the reciprocating movement of the second carrier 304 even without the second elastic member 359, the second elastic member 359 may be omitted. When the second elastic member 359 is omitted, the first guide member 303a and the second guide member 303b may be manufactured substantially integrally.

According to an embodiment, the second elastic member 359 may be disposed on the first guide member 303a and may be connected to the end portion of the second carrier 304 in the +Z direction. After assembling the second carrier 304 to the first guide member 303a via the second elastic member 359, the elastic member 305 may connect the second guide member 303b and the second carrier 304 at the end portion in the -Z direction. This assembly sequence may vary depending on the specifications or assembly structure of an actually manufactured camera module 300. For example, a rail structure may be used to guide or support the reciprocating movement of the second carrier 304. In this case, the second elastic member 359 may be omitted, and the first guide member 303a and the second guide member 303b may be manufactured integrally. When the first guide member 303a and the second guide member 303b are integrally manufactured, the elastic member 305 may connect the second guide member 303b and the second carrier 304 at the end portion in the -Z direction, thereby substantially placing or assembling the second carrier 304 in the first carrier 303 (e.g., the second guide member 303b).

According to an embodiment, the first guide member 303a may be disposed, for example, on the first casing 301a, and may reciprocate relative to the first casing 301a in either the X-axis direction or the Y-axis direction. The second guide member 303b may reciprocate relative to the first guide member 303a along the X-axis direction and/or the Y-axis direction together with the first guide member 303a. In an embodiment, the one or more elastic members 305 may support or guide the reciprocating movement of the first carrier 303 in the X-axis direction and the Y-axis direction. As the first carrier 303 (e.g., the first guide member 303a and the second guide member 303b) reciprocates, one or more balls 339 may be provided between the first casing 301a and the first guide member 303a, thereby facilitating the reciprocating movement of the first carrier 303. In an embodiment, the first casing 301a and/or the first guide member 303a may include a guide groove 319 that accommodates the balls 339. For example, the one or more balls 339 may move relative to the first casing 301a within an area or range defined by the guide groove 319, thereby determining the horizontal movement range of the first carrier 303.

According to an embodiment, the first carrier 303 (e.g., the first guide member 303a and the second guide member 303b) may move horizontally relative to the image sensor 302, thereby implementing an optical image stabilization operation. For example, an electronic device (e.g., the processor 1020 in FIG. 1) may detect vibrations (e.g., vibrations of the electronic device 200) caused by an external force (e.g., a user's hand tremors) using the sensor module 1076 in FIG. 1, and may apply an electrical signal to the driver 306 (e.g., the one or more first coils 361a) based on the detected vibrations, thereby causing the first carrier 303 (e.g., the first guide member 303a and/or the second guide member 303b) to move (or vibrate) horizontally relative to the image sensor 302. This may suppress the degradation of captured image quality due to external forces such as hand tremors. The optical image stabilization operation using the driver 306 and the guiding structure using the one or more balls 339 in the optical image stabilization operation may refer to the structure disclosed in Korean Patent No. 2,255,295 (registered on May 17, 2021) and U.S. Patent No. 10,571,713 (registered on February 25, 2020). In an embodiment, the first carrier 303 (e.g., the first guide member 303a and the second guide member 303b) may be disposed on the casing 301 in a state capable of horizontal movement by the elastic member 305. For example, the guiding structure using the one or more balls 339 may provide more stable horizontal movement of the first carrier 303. However, embodiments of the disclosure are not limited thereto, and depending on the specifications or structure of the elastic member 305, the guiding structure using the one or more balls 339 may be omitted.

According to an embodiment, the second carrier 304 may be connected to the first carrier 303 (e.g., the second guide member 303b and the first guide member 303a) via the elastic member 305 (and/or the second elastic member 359). For example, when the first carrier 303 moves horizontally, the second carrier 304 may move horizontally together with the first carrier 303 relative to the image sensor 302. In an embodiment, due to the driving force generated in the driver 306 (e.g., between the second coil 361b and one or more magnets 363), the second carrier 304 may reciprocate along the optical axis O relative to the first carrier 303. Depending on the position of the second carrier 304, one or more elastic members 305 (and/or the second elastic member 359) may be at least partially deformed while guiding or supporting the second carrier 304. In an embodiment, the elastic force accumulated in the one or more elastic members 305 (and/or the second elastic member 359) due to deformation may act as a driving force that returns the second carrier 304 to its initial position. For example, when no electrical signal is applied to the driver 306 (e.g., the second coil 361b), the second carrier 304 may be disposed at a position where the accumulated elastic force of the one or more elastic members 305 (and/or the second elastic member 359) is minimized.

Although not illustrated, a rail structure may be provided between the first carrier 303 (e.g., the second guide member 303b) and the second carrier 304, thereby guiding the linear movement (e.g., reciprocation along the optical axis O) of the second carrier 304 and restricting the movement of the second carrier 304 in other directions relative to the first carrier 303. This rail structure may be implemented by providing the second carrier 304 in a polygonal pillar shape and providing the second guide member 303b with a space corresponding to the shape of the second carrier 304. In an embodiment, one or more protruding structures may be provided on the outer wall of the second carrier 304, and one or more rail grooves extending parallel to the optical axis O may be provided on the inner wall of the second guide member 303b, thereby implementing the rail structure. The rail structure may be implemented in a form different from the aforementioned structure, as long as it allows the linear movement of the second carrier 304 relative to the first carrier 303 while restricting the movement of the second carrier 304 relative to the first carrier 303 in a direction other than the optical axis O direction. Meanwhile, to ensure smooth movement of the second carrier 304 along the optical axis O, a predetermined gap may be provided in the rail structure (or between the second guide member 303b and the second carrier 304), and this gap may allow the second carrier 304 to tilt or move in a direction other than the optical axis O direction. As mentioned above, when this rail structure is provided, the second elastic member 359 may be omitted.

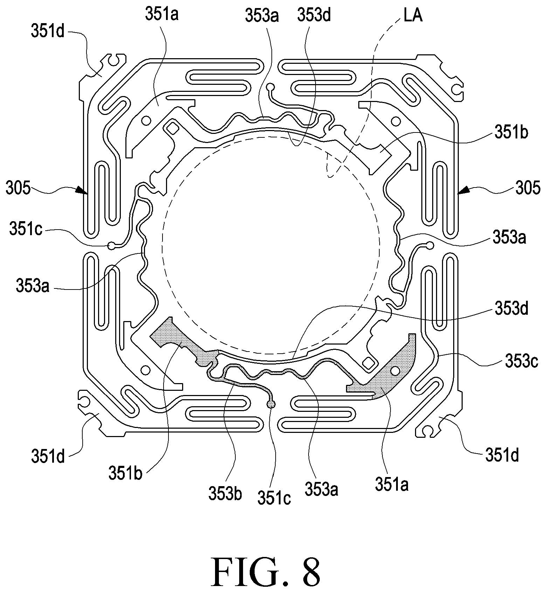

According to an embodiment, the one or more elastic members 305 (and/or the second elastic member 359) may mechanically connect the second carrier 304 to the first carrier 303 while supporting or guiding the movement of the second carrier 304 relative to the first carrier 303. In an embodiment, the one or more elastic members 305 may mechanically connect the first carrier 303 to the casing 301 (e.g., the first casing 301a) while supporting or guiding the horizontal movement of the first carrier 303 relative to the image sensor 302. In an embodiment, one or more balls 339 may be further provided to support or guide the horizontal movement of the first carrier 303 together with the one or more elastic members 305. In an embodiment, the one or more elastic members 305 may include one or more elastic portions (e.g., the elastic portions 353a, 353b, 353c, and 353d in FIG. 8) that extend in a meanderline shape substantially on a single plane. Depending on the shape of the elastic members 305 and/or the elastic portions 353a, 353b, 353c, and 353d, a single camera module 300 may include a plurality of elastic members 305. In an embodiment, a single elastic member 305 may include a plurality of elastic portions 353a, 353b, 353c, and 353d, in which case a structure in which the single elastic member 305 is arranged in one camera module 300 may be implemented. For convenience of explanation, the term "elastic portion" has been used. However, in the embodiments described later, some of the elastic portions 353a, 353b, 353c, and 353d may function as structures that connect two adjacent elastic portions or as structures fixed to the first carrier 303 or the second carrier 304. For example, some of the elastic portions 353a, 353b, 353c, and 353d described later may refer to mechanical connection structures or fixing structures. In this case, such elastic portions may not substantially accumulate or provide elastic force. Embodiments of the one or more elastic members 305 will be described with reference to FIG. 8 to FIG. 10.

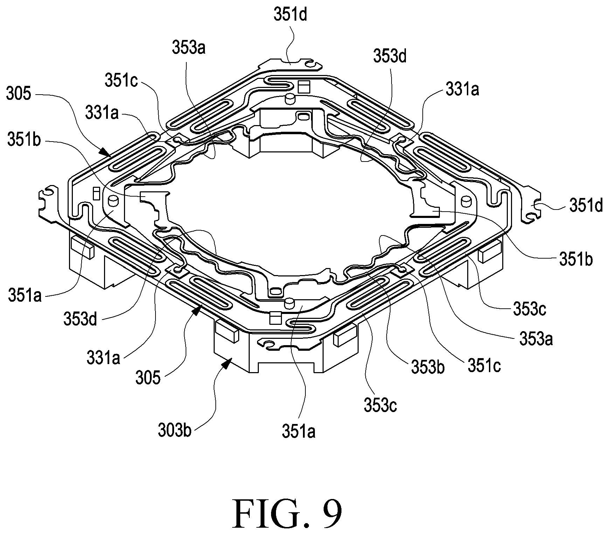

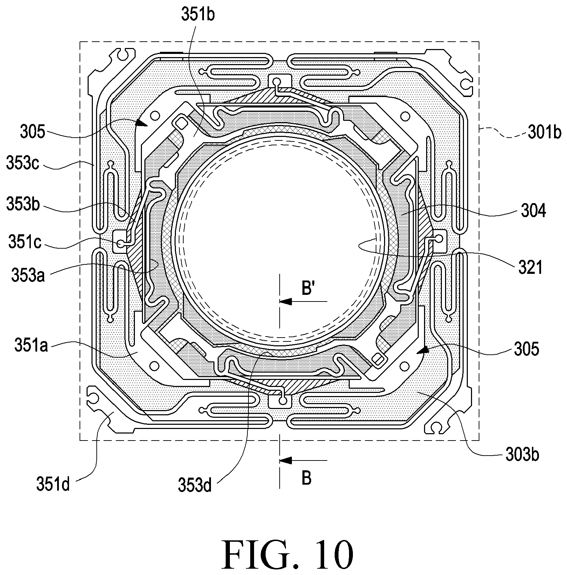

FIG. 8 is a view illustrating one or more elastic members 305 of a camera module (e.g., the camera module 300 in FIG. 6 or FIG. 7) according to an embodiment of the disclosure. FIG. 9 is a perspective view illustrating a state in which the one or more elastic members 305 of the camera module 300 according to an embodiment of the disclosure are disposed on a first carrier 303 (e.g., the second guide member 303b). FIG. 10 is a view illustrating a state in which the second carrier 304 is disposed on a first carrier 303 via the one or more elastic members 305 of the camera module 300 according to an embodiment of the disclosure.

In the structure illustrated in FIG. 8 to FIG. 10, one elastic member 305 has structure including two first elastic portions 353a, and two elastic members 305 having substantially the same shape may be disposed in one camera module 300. In the illustrated embodiment, the elastic member 305 includes a fourth elastic portion 353d that connects two adjacent second fixing portions 351b, and two fourth elastic portions 353d may be disposed in one camera module 300. For example, based on the state illustrated in FIG. 8, the fourth elastic portions 353d may be disposed at the upper and lower sides of a lens area LA (e.g., the area where the lens array 321 in FIG. 6 is disposed). Although not illustrated, the camera module 300 may further include an additional fourth elastic portion connecting the second fixing portion 351b positioned at the left upper side and the second fixing portion 351b positioned at the left lower side, and/or an additional fourth elastic portion connecting the second fixing portion 351b positioned at the right upper side and the second fixing portion 351b positioned at the right lower side. For example, the additional fourth elastic portion may be disposed on the left and/or right sides of the lens area LA. When the one or more additional fourth elastic portions are included, one elastic member 305 may be understood as a structure including four first elastic portions 353a. In this case, a single elastic member 305 may be disposed in a single camera module 300 while implementing a structure substantially the same as the elastic members 305 illustrated in FIG. 8. For example, the number and shape of the elastic members 305 and/or the elastic portions 353a, 353b, 353c, and 353d mentioned in this embodiment are merely exemplary and do not limit the embodiments of the disclosure. In an embodiment, the fourth elastic portion 353d may be fixed on the second carrier 304 without substantially accumulating elastic force.

Referring to FIG. 8 to FIG. 10, the one or more elastic members 305 may each include the first fixing portion 351a, the first elastic portion 353a, and/or the second fixing portion 351b, thereby connecting the second carrier 304 to the first carrier 303. In an embodiment, the one or more elastic members 305 may include a second elastic portion 353b and a third fixing member 351c, thereby controlling the movement of the second carrier 304 through the elastic force accumulated in the first elastic portion 353a or the elastic force of the first elastic portion 353a. For example, in the optical image stabilization operation of the first carrier 303, an external force may be applied to the second carrier 304 in a direction other than the optical axis O. Even if a rail structure is provided to restrict the movement of the second carrier 304 in a direction other than linear movement along the optical axis O, an inclined movement (e.g., a tilting phenomenon) of the second carrier 304 relative to the optical axis O may occur when implementing smooth linear movement. The second elastic portion 353b may suppress the tilting phenomenon of the second carrier 304 (and/or the lens array 321), thereby reducing distortion of the autofocusing state of the camera module 300 during the optical image stabilization operation.

According to an embodiment, as mentioned above, the one or more elastic members 305 include one or more elastic portions 353a, 353b, 353c, and 353d that extend in a meandering shape on a single plane, and the one or more fixing portions 351a, 351b, 351c, and 351d may be disposed on the first carrier 303, the second carrier 304, and/or the casing 301 (e.g., the first casing 301a). For example, the one or more elastic members 305 may support or guide the optical image stabilization operation and/or the autofocusing operation while mechanically connecting the first carrier 303, the second carrier 304, and/or the casing 301. In an embodiment, the first fixing member 351a may be supported on the first carrier 303 (e.g., the second guide member 303b), and the first elastic portion 353a may extend from the first fixing member 351a. In an embodiment, the second fixing member 351b may be supported on the second carrier 304 while being provided at an end portion of the first elastic portion 353a. For example, the first elastic portion 353a may substantially connect the first carrier 303 and the second carrier 304 and may allow or guide the second carrier 304 to move along the optical axis O relative to the first carrier 303.

According to an embodiment, when viewed along the optical axis O, a plurality of first elastic portions 353a may be arranged along the circumferential direction of the lens array 321 and/or the lens area LA. For example, the plurality of first elastic portions 353a may be arranged at equal angular intervals along the circumferential direction of the lens array 321. In an embodiment, in a structure where at least one pair of first elastic portions 353a is arranged, the first elastic portions 353a may be symmetrically disposed about lens array 321. In the structure where the plurality of first elastic portions 353a are arranged along the circumferential direction of the lens array 321, one first elastic portion 353a may extend from any one of the first fixing portions 351a toward an adjacent first fixing portion 351a.

According to an embodiment, a second elastic portion 353b may extend from a first elastic portion 353a between a first fixing portion 351a and a second fixing portion 351b. A third fixing portion 351c may be provided at an end portion of a second elastic portion 353b and may be supported on the first carrier 303 at a position different from that of the first fixing portion 351a. The second elastic portion 353b may suppress external forces applied to the second carrier 304 during the optical image stabilization operation. For example, the horizontal movement (or vibration) of the first carrier 303, the inertia of the second carrier 304 moving (or vibrating) together with the first carrier 303, and/or inconsistencies in the movement direction of the second carrier 304 at the moment of switching the vibration direction may cause deformation of the first elastic portions 353a in a direction other than the optical axis O direction. The elastic force accumulated due to the deformation of the first elastic portions 353a may induce vibrations of the second carrier 304 relative to the first carrier 303 (e.g., a tilting phenomenon) (hereinafter referred to as "nth-order resonance), even after the optical image stabilization operation is completed. According to an embodiment, the second elastic portions 353b may suppress deformation of the first elastic portions 353a by restricting the movement of the second carrier 304 relative to the first carrier 303 in a direction other than the optical axis O direction during the optical image stabilization operation. For example, by using the elastic member 305 instead of one or more balls 339, the guiding structure for the optical image stabilization operation may be simplified. In addition, by using the second elastic portions 353b, interference with the autofocusing function that may be caused by nth-order resonance during the optical image stabilization operation may be suppressed.

According to an embodiment, similar to how the second carrier 304 is connected to the first carrier 303 via the first elastic portions 353a, one or more elastic members 305 may connect the first carrier 303 to the casing 301 (e.g., the first casing 301a) via the third elastic portions 353c. A third elastic portion 353c may, for example, extend from a first fixing portion 351a, and a fourth fixing portion 351d provided at an end portion of a third elastic portion 353c may be supported on the first casing 301a. According to an embodiment, a third elastic portion 353c may mechanically connect a first carrier 303 (e.g., the second guide member 303b) to the first casing 301a while allowing or guiding the horizontal movement of the first carrier 303 on a plane substantially perpendicular to the optical axis O. For example, referring to the state illustrated in FIG. 8, the first carrier 303 may move (or vibrate) in the up-down direction and/or the left-right direction relative to the casing 301 or the image sensor 302.

In the embodiment illustrated in FIG. 8, two elastic members 305 may be provided in one camera module 300, and each elastic member 305 may include two first elastic portions 353a and/or two second fixing portions 351b. In this case, the elastic members 305 may further include the fourth elastic portions 353d, each of which may extend from one of the second fixing portions 351b and may be connected to another second fixing portion 351b. When the fourth elastic portions 353d are omitted in the embodiment of FIG. 8, it may be understood that four elastic members 305 are disposed in a single camera module 300. When an additional fourth elastic portion connecting the left upper second fixing portion 351b and the left lower second fixing portion 351b (or an additional fourth elastic portion connecting the right upper second fixing portion 351b and the right lower second fixing portion 351b) is provided in the embodiment of FIG. 8, it may be understood that one elastic member 305 is disposed in a single camera module 300. For example, the number and shapes of elastic members 305 described above or illustrated in the drawings are merely exemplary, and embodiments of the disclosure are not limited thereto.

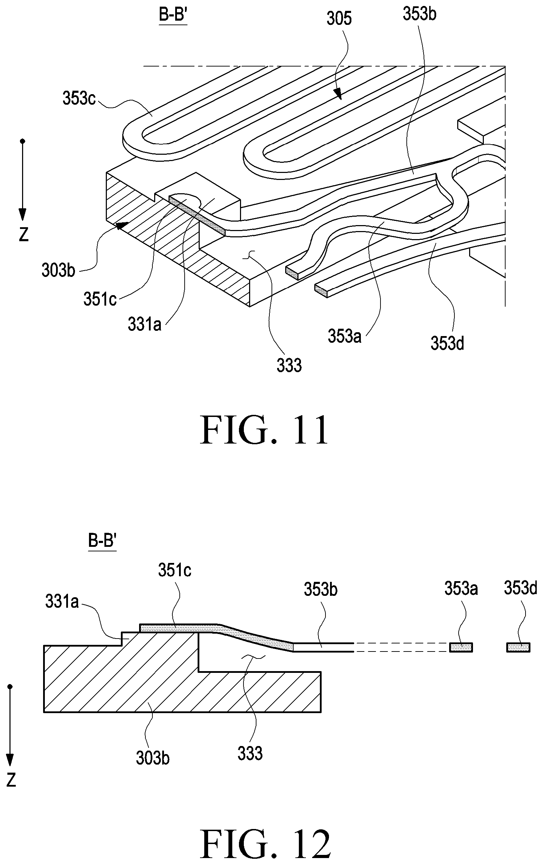

FIG. 11 is a perspective view illustrating the first carrier 303 and/or the one or more elastic members 305 cut along line B-B' of FIG. 10, according to an embodiment of the disclosure. FIG. 12 is a view illustrating the first carrier 303 and/or the one or more elastic members 305 cut along line B-B' of FIG. 10, according to an embodiment of the disclosure.

Referring to FIG. 11 and FIG. 12, a camera module (e.g., the camera module 300 in FIG. 6 or FIG. 7) and/or a first carrier 303 (e.g., the second guide member 303b) may further include a support protrusion 331a. The support protrusion 331a may, for example, protrude from a surface (e.g., the top surface) of the first carrier 303 (e.g., the second guide member 303b) and serves as a structure where the third fixing portion 351c is disposed or supported. In an embodiment, when the third fixing portion 351c is positioned to correspond to the support protrusion 331a, the second elastic portion 353b may be at least partially positioned on a surface of the first carrier 303. In an embodiment, to ensure that the third fixing portion 351c is more stably disposed on the first carrier 303, the third fixing portion 351c may at least partially have a width greater than that of the second elastic portion 353b. For example, by expanding the contact area with the first carrier 303, the third fixing portion 351c may be stably supported on the first carrier 303. When the second carrier 304 moves along the optical axis O relative to the first carrier 303, the second elastic portion 353b may be deformed along the Z-axis relative to the support protrusion 331a. To prevent mechanical interference or contact when the second elastic portion 353b is deformed, the first carrier 303 may further include an avoidance groove 333 that is recessed on a surface. For example, the avoidance groove 333 may be provided as a space that allows deformation of the second elastic portion 353b.

According to an embodiment, in a state in which no external force is applied (e.g., when no electrical signal is applied to the second coil 361b in FIG. 6), the second elastic portion 353b may be preloaded in a curved or bent state. Referring to the cross-sectional view in FIG. 12, the second elastic portion 353b and/or the third fixing portion 351c may be disposed in a state preloaded in the +Z direction relative to the support protrusion 331a. In an embodiment, the second elastic portion 353b may be disposed in a non-preloaded state. For example, whether the second elastic portion 353b is preloaded may be determined considering the specifications of an actually manufactured camera module 300, the behavior of the second carrier 304 during the optical image stabilization operation, and/or the vibration peak of nth-order resonance.

In the following embodiments of the disclosure, components that may be easily understood through prior embodiments may be assigned the same reference numerals in the drawings or may be omitted, and their detailed descriptions may also be omitted. For components omitted in the embodiments described later, the configurations of the aforementioned embodiments may be applied. The positions of section lines or section planes in the embodiments described later may follow the embodiment of FIG. 10.

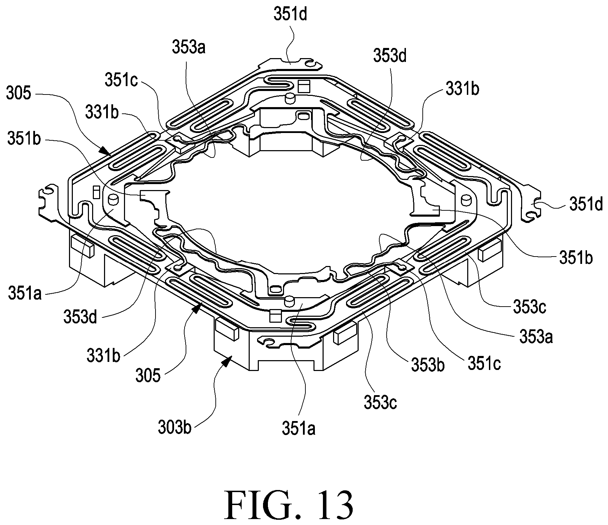

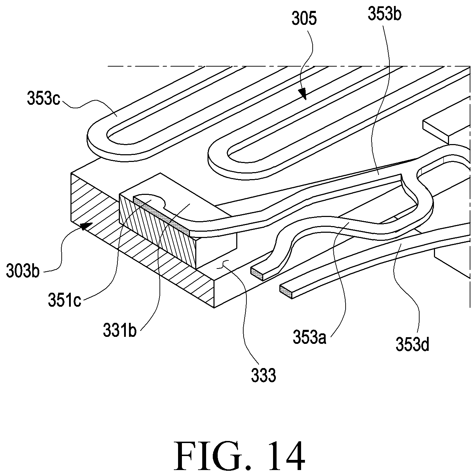

FIG. 13 is a perspective view illustrating a state in which the one or more elastic members 305 of a camera module (e.g., the camera module 300 in FIG. 6 or FIG. 7) are disposed on the first carrier 303 (e.g., the second guide member 303b) according to an embodiment of the disclosure. FIG. 14 is a cutaway perspective view illustrating the first carrier 303 (e.g., the second guide member 303b) and/or the one or more elastic members 305 of FIG. 13 according to an embodiment of the disclosure.

Referring to FIGS. 13 and 14, the camera module 300 and/or the first carrier 303 may further include a first damping member 331b that replaces a support protrusion (e.g., the support protrusion 331a in FIG. 11 or FIG. 12). The first damping member 331b may include an elastic sheet or double-sided tape. In an embodiment, when the first damping member 331b made of an elastic material is disposed, the vibration peak of nth-order resonance may be further suppressed. For example, when the second carrier 304 was tilted due to an optical image stabilization operation, it was confirmed that, when the first damping member 331b was disposed, the vibration peak was suppressed by about 3 to 5 dB at second-order resonance and by about 1 to 2 dB at third-order resonance. For example, by disposing the second elastic portion 353b, the tilting phenomenon of the second carrier 304 and/or the lens array 321 in the optical image stabilization operation may be suppressed, and when the first damping member 331b was disposed, nth-order resonance and/or vibration peaks that may occur due to the tilting phenomenon may be suppressed.

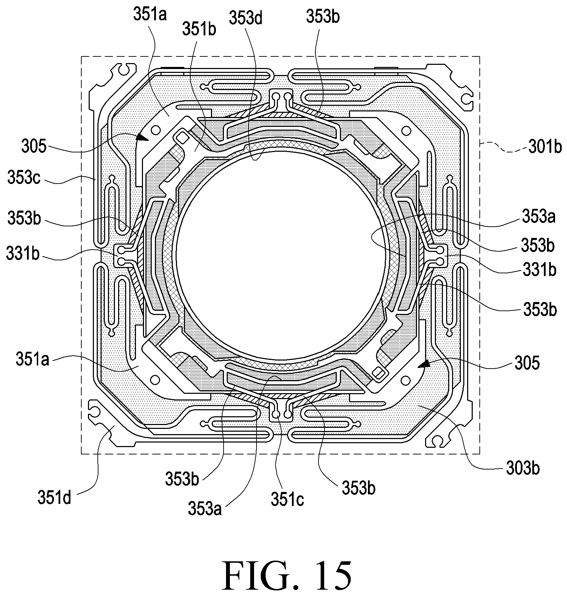

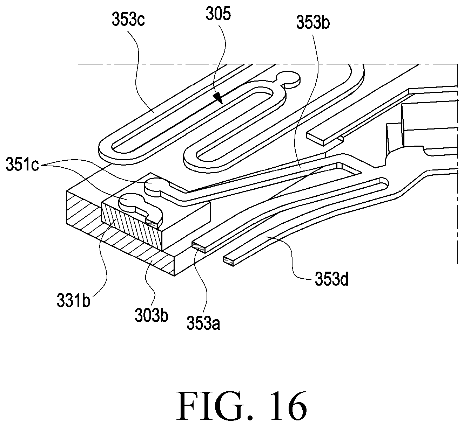

FIG. 15 is a view illustrating a state in which the second carrier 304 is disposed on the first carrier 303 (e.g., the second guide member 303b) via one or more elastic members 305 of a camera module (e.g., the camera module 300 in FIG. 6 or FIG. 7) according to an embodiment of the disclosure. FIG. 16 is a cutaway perspective view illustrating the first carrier 303 and/or the one or more elastic members 305 of FIG. 15 according to an embodiment of the disclosure.

Referring to FIGS. 15 and 16, the camera module 300 and/or the elastic member 305 may include a plurality of (e.g., a pair of) second elastic portions 353b extending from one first elastic portion 353a. For example, a pair of second elastic portions 353b may extend from different positions on one first elastic portion 353a and may be supported or disposed on a single support protrusion (e.g., the support protrusion 331a in FIG. 11) and/or a single first damping member 331b via respective third fixing portions 351c. In an embodiment (not illustrated), a single third fixing portion 351c may be provided, and the end portions of a pair of second elastic portions 353b may be supported or disposed on the support protrusion (e.g., the support protrusion 331a in FIG. 11) and/or the first damping member 331b via the single third fixing portion 351c. As such, the application of the support protrusion 331a or the first damping member 331b, or the number of second elastic portions 353b (or third fixing portions 351c) may be appropriately selected depending on the specifications of an actually manufactured camera module 300.

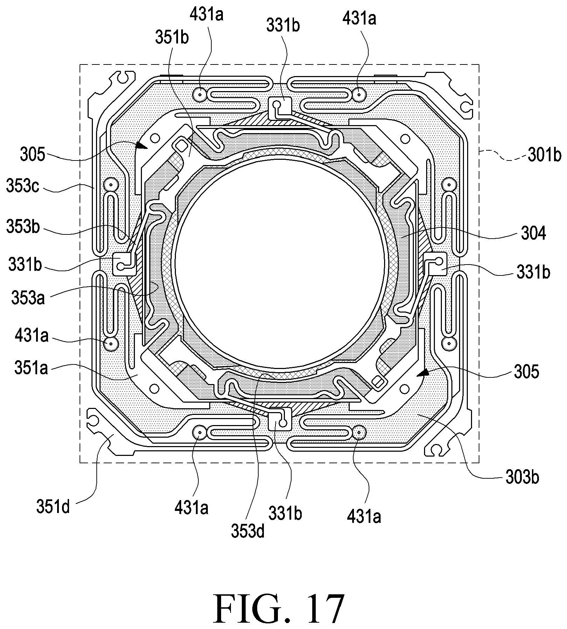

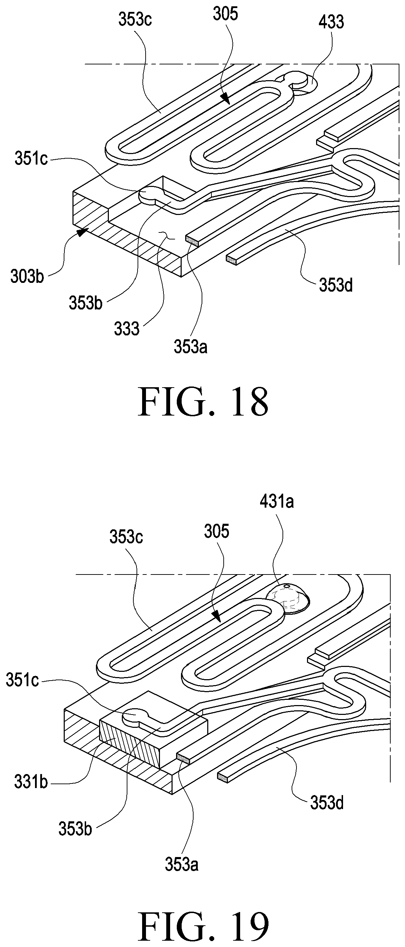

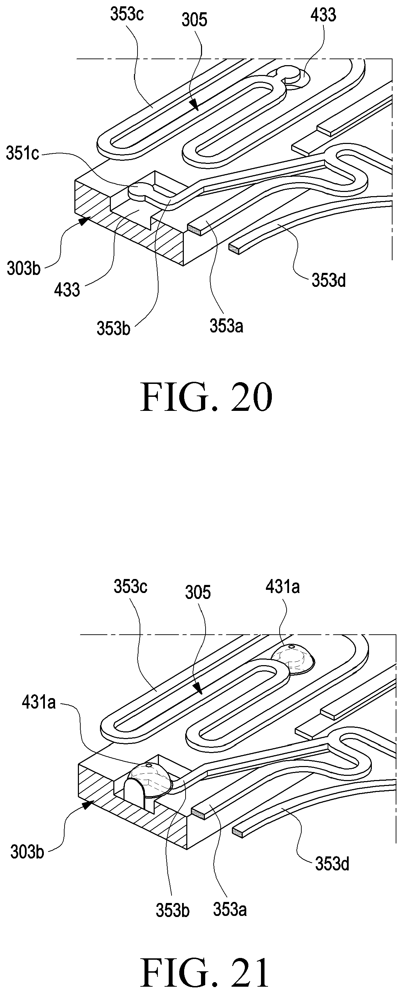

FIG. 17 is a view illustrating a state in which the second carrier 304 is disposed on the first carrier 303 (e.g., the second guide member 303b) via one or more elastic members 305 of a camera module (e.g., the camera module 300 in FIG. 6 or FIG. 7) according to an embodiment of the disclosure. FIG. 18 is a cutaway perspective view illustrating the first carrier 303 and/or the one or more elastic members 305 before one or more damping members 331b and 431a are disposed on the first carrier 303 of FIG. 17, according to an embodiment of the disclosure. FIG. 19 is a cutaway perspective view illustrating the first carrier 303 and/or the one or more elastic members 305 of FIG. 17 according to an embodiment of the disclosure. FIG. 20 is a cutaway perspective view illustrating the first carrier 303 and/or the one or more elastic members 305 before one or more damping members 431a are disposed on the first carrier 303 of the camera module 300 according to an embodiment of the disclosure. FIG. 21 is a cutaway perspective view illustrating the first carrier 303 and/or the one or more elastic members 305 of the camera module 300 according to an embodiment of the disclosure.

Referring to FIGS. 17 to 21, the camera module 300 may further include a second damping member 431a. The second damping member 431a may, for example, support a portion of the third elastic portion 353c on the first carrier 303 (e.g., the second guide member 303b). For example, when deformation of the third elastic portion 353c occurs during an optical image stabilization operation and/or an autofocusing operation, or when nth-order resonance occurs due to the elastic force accumulated in the third elastic portion 353c, the second damping member 431a may suppress nth-order resonance or vibration peaks at nth-order resonance. The function or operation of the second damping member 431a may be similar to that of the first damping member 331b, and thus a detailed description thereof will be omitted.

According to an embodiment, the second damping member 431a may be provided in the form of a gel. The gel-type second damping member 431a may have an appropriate viscosity considering its suppression effect on nth-order resonance and its durability. In an embodiment, when disposing the first damping member 331b and/or the second damping member 431a, the camera module 300 and/or the first carrier 303 (e.g., the second guide member 303b) may further include one or more receiving grooves 433. The one or more receiving grooves 433 may be provided, for example, at position or areas where the first damping member 331b and/or the second damping member 431a are disposed. In an embodiment, when the first carrier 303 includes the avoidance groove 333, the first damping member 331b or the second damping member 431a may be disposed in a portion of the avoidance groove 333.

A camera module (e.g., the camera module 1080 or 300 in FIG. 1, FIG. 6, or FIG. 7) and/or an electronic device (e.g., the electronic device 1001, 1002, 1004, 100, 200 in FIG. 1 to FIG. 5) including the same according to the embodiments of the disclosure may provide a guiding structure for an optical image stabilization operation and/or an autofocusing operation using an elastic member (e.g., the elastic member 305 in FIG. 6 to FIG. 11) implemented in a planar shape, thereby offering an improved image quality while maintaining a simplified structure. For example, the camera module and/or the electronic device according to the embodiments of the disclosure may provide enhanced image quality while reducing manufacturing costs or user purchasing costs. In an embodiment, by including a second elastic portion (e.g., the second elastic portion 353b in FIG. 8 to FIG. 12) and/or one or more damping members (e.g., the support protrusion 331a in FIG. 9, the first damping member 331b in FIG. 13, and/or the one or more second damping member 431a in FIG. 19), the elastic member may suppress nth-order resonance and vibration peaks that may occur during an optical image stabilization operation and/or an autofocusing operation. For example, the control of an optical image stabilization operation and/or an autofocusing operation may be facilitated, and the quality of captured images in the camera module and/or the electronic device may be further improved.

The effects capable of being obtained by the disclosure are not limited to those described above, and other effects not described above may be clearly understood by a person ordinarily skilled in the art to which the disclosure belongs from the descriptions of the above-described embodiments.

According to an embodiment of the disclosure, a camera module (e.g., the camera module 1080 or 300 in FIG. 1, FIG. 6, or FIG. 7) and/or an electronic device including the same (e.g., the electronic device 1001, 1002, 1004, 100, or 200 in FIG. 1 to FIG. 5) may include an image sensor (e.g., the image sensor 302 in FIG. 6) configured to receive light incident in an optical axis direction (e.g., the optical axis (O) in FIG. 6) and to generate an electrical signal, a first carrier (e.g., the first carrier 303 in FIG. 6) configured to move at least partially horizontally relative to the image sensor on a plane substantially perpendicular to the optical axis, a second carrier (e.g., the second carrier 304 in FIG. 6) disposed on the first carrier and configured to move horizontally relative to the image sensor together with at least a portion of the first carrier and to move along the optical axis relative to the first carrier, a lens array (e.g., the lens array 321 in FIG. 6) disposed on the second carrier and configured to move along the optical axis relative to the first carrier together with the second carrier and to guide or focus light incident along the optical axis onto the image sensor, and at least one elastic member (e.g., the elastic member 305 in FIG. 6 to FIG. 12) connecting the second carrier to the first carrier and configured to support or guide the movement of the second carrier relative to the first carrier. In an embodiment, the elastic member may include a first fixing portion (e.g., the first fixing portion 351a in FIG. 8) supported by the first carrier, a first elastic portion (e.g., the first elastic portion 353a in FIG. 8) extending from the first fixing portion, a second fixing portion (e.g., the second fixing portion 351b in FIG. 8) provided at an end portion of the first elastic portion and supported by the second carrier, at least one second elastic portion (e.g., the second elastic portion 353b in FIG. 8) extending from the first elastic portion between the first fixing portion and the second fixing portion, and a third fixing portion (e.g., the third fixing portion 351c in FIG. 8) provided at an end portion of the second elastic portion and supported by the first carrier.

According to an embodiment, the first elastic portion may be configured to allow or guide movement of the second carrier along the optical axis relative to the first carrier.

According to an embodiment, when viewed along the optical axis direction, at least one pair of first elastic portions may be disposed symmetrically about the lens array.

According to an embodiment, when viewed along the optical axis direction, a plurality of first elastic portions may be disposed at equal angular intervals along a circumferential direction of the lens array.

According to an embodiment, the plurality of first elastic portions may extend from the first fixing portion in a direction toward another adjacent first fixing portion.

According to an embodiment, a pair of second elastic portions may each extend from the first elastic portion.

According to an embodiment, the third fixing portion may at least partially have a width greater than the second elastic portion.

According to an embodiment, the above-described camera module and/or an electronic device including the same may further include a first damping member (e.g., the first damping member 331b in FIG. 13 or FIG. 14) disposed between the first carrier and the third fixing portion.

According to an embodiment, a pair of second elastic portions may each extend from the first elastic portion, and a pair of third fixing portions may each be disposed on one first damping member.

According to an embodiment, the above-described camera module and/or an electronic device including the same may further include a receiving groove (e.g., the receiving groove 433 in FIG. 18 or FIG. 20) provided in the first carrier. In an embodiment, the first damping member may be at least partially received in the receiving groove.

According to an embodiment, the above-described camera module and/or an electronic device including the same may further include a support protrusion (e.g., the support protrusion 331a in FIG. 11 or FIG. 12) protruding from a surface of the first carrier. In an embodiment, the third fixing portion may be supported by the support protrusion.

According to an embodiment, a pair of second elastic portions may each extend from the first elastic portion, and a pair of third fixing portions may be disposed on one support protrusion.

According to an embodiment, the above-described camera module and/or an electronic device including the same may further include a casing (e.g., the casing 301 in FIG. 6) that at least partially receives the first carrier in a horizontally movable state on a plane perpendicular to the optical axis.

According to an embodiment, the elastic member may further include a third elastic portion (e.g., the third elastic portion 353c in FIG. 8) extending from the first fixing portion, and a fourth fixing portion (e.g., the fourth fixing portion 351d in FIG. 8) provided at an end portion of the third elastic portion and supported by the casing. In an embodiment, the third elastic portion is configured to allow or guide movement of the first carrier on a plane perpendicular to the optical axis relative to the casing.

According to an embodiment, the above-described camera module and/or an electronic device including the same may further include a second damping member (e.g., the second damping member 431a in FIG. 17, FIG. 19, or FIG. 21) disposed between a portion of the third elastic portion and the first carrier. In an embodiment, the portion of the third elastic portion may be supported on the first carrier via the second damping member.

According to an embodiment, the first carrier may be configured to move horizontally in a first direction perpendicular to the optical axis and in a second direction perpendicular to both the optical axis and the first direction.

According to an embodiment of the disclosure, an electronic device (e.g., the electronic device 1001, 1002, 1004, 100, or 200 in FIGS. 1 to 5) may include the above-described camera module and a processor (e.g., the processor 1020 in FIG. 1) configured to acquire a subject image using the camera module.

According to an embodiment, the processor may be configured to perform an optical image stabilization operation by moving the first carrier horizontally on a plane perpendicular to the optical axis.

According to an embodiment, the processor may be configured to perform a focusing operation by moving the second carrier along the optical axis relative to the first carrier.

According to an embodiment, the above-described electronic device may further include a sensor module (e.g., the sensor module 1076 in FIG. 1) configured to detect vibrations of the electronic device caused by an external force. In an embodiment, the processor may be configured to move the first carrier horizontally on a plane perpendicular to the optical axis based on vibrations detected by the sensor module.

According to an embodiment of the disclosure, the electronic device (e.g., the electronic device 1001, 1002, 1004, 100, 200 in FIG. 1 to FIG. 5) may include the above-described camera module, the processor (e.g., the processor 1020 in FIG. 1), and memory configured to store instructions. In an embodiment, the instructions may be configured to cause the electronic device to acquire a subject image using the camera module when executed by the processor.

According to an embodiment, the instructions may be configured to cause the electronic device to move the first carrier horizontally on a plane perpendicular to the optical axis when executed by the processor. In an embodiment, the phrase "moving the first carrier horizontally on a plane perpendicular to the optical axis" may refer to performing an optical image stabilization operation.

According to an embodiment, the instructions may be configured to cause the electronic device to move the second carrier along the optical axis relative to the first carrier when executed by the processor. In an embodiment, the phrase "moving the second carrier along the optical axis relative to the first carrier" may refer to performing a focusing operation.

According to an embodiment, the above-described electronic device may further include a sensor module (e.g., the sensor module 1076 in FIG. 1) configured to detect vibrations of the electronic device caused by an external force. In an embodiment, the instructions may be configured to cause the electronic device to move the first carrier horizontally on a plane perpendicular to the optical axis based on vibrations detected by the sensor module when executed by the processor.

Although the disclosure has been described with reference to an embodiment as an example, it is to be understood that the embodiment is intended to be exemplary and is not limiting the disclosure. It will be apparent to those skilled in the art that various changes in form and detail may be made without departing from the overall scope of the disclosure, including the appended claims and their equivalents. For example, in the above-described embodiment, the shape of one or more elastic members and/or the elastic portions have been referred to as a "meandering shape," but embodiments of the disclosure are not limited thereto. Considering manufacturing conditions such as the movement range of the first carrier or the second carrier and the weight of the first carrier or the second carrier in an actually manufactured state, the shape and/or elastic modulus (e.g., material) of the one or more elastic members and/or the one or more elastic portions may be appropriately modified.

## Claims

1. A camera module (1080; 300) comprising:
an image sensor (302) configured to receive light incident in an optical axis (O) direction and generate an electrical signal;
a first carrier (303) configured to at least partially horizontally move relative to the image sensor on a plane perpendicular to the optical axis;
a second carrier (304) disposed on the first carrier and configured to move horizontally relative to the image sensor together with at least a portion of the first carrier, and to move along the optical axis relative to the first carrier;
a lens array (321) disposed on the second carrier and configured to move along the optical axis relative to the first carrier together with the second carrier, and to guide or focus the light incident along the optical axis to the image sensor; and
at least one elastic member (305) connecting the second carrier to the first carrier and configured to support or guide movement of the second carrier relative to the first carrier,
wherein the elastic member comprises:
a first fixing portion (351a) supported by the first carrier;
a first elastic portion (353a) extending from the first fixing portion;
a second fixing portion (351b) provided at an end portion of the first elastic portion and supported by the second carrier;
at least one second elastic portion (353b) extending from the first elastic portion between the first fixing portion and the second fixing portion; and
a third fixing portion (351c) provided at an end portion of the second elastic portion and supported by the first carrier.

2. The camera module of claim 1, wherein the first elastic portion is configured to allow or guide movement of the second carrier along the optical axis relative to the first carrier.

3. The camera module of claim 1 or claim 2, wherein, when viewed along the optical axis direction, at least one pair of first elastic portions is disposed symmetrically about the lens array.

4. The camera module of any one of claims 1 to 3, wherein, when viewed along the optical axis direction, a plurality of first elastic portions are disposed at equal angular intervals along a circumferential direction of the lens array.

5. The camera module of claim 4, wherein the plurality of first elastic portions extend from the first fixing portion in a direction toward another adjacent first fixing portion.

6. The camera module of any one of claims 1 to 5, wherein a pair of second elastic portions each extends from the first elastic portion.

7. The camera module of any one of claims 1 to 6, wherein the third fixing portion at least partially has a width greater than the second elastic portion.

8. The camera module of any one of claims 1 to 7, further comprising:
a first damping member (331b) disposed between the first carrier and the third fixing portion.

9. The camera module of claim 8, wherein a pair of second elastic portions each extends from the first elastic portion, and a pair of third fixing portions is disposed on the first damping member.

10. The camera module of any one of claims 8 and 9, further comprising:
a receiving groove (433) provided in the first carrier,
wherein the first damping member is at least partially received in the receiving groove.

11. The camera module of any one of claims 1 and 10, further comprising:
a support protrusion (331a) protruding from a surface of the first carrier,
wherein the third fixing portion is supported by the support protrusion.

12. The camera module of claim 11, wherein a pair of second elastic portions each extends from the first elastic portion, and a pair of third fixing portions is disposed on the support protrusion.

13. The camera module of any one of claims 1 to 12, further comprising:
a casing (301) at least partially receiving the first carrier in a state in which the first carrier is horizontally movable on a plane perpendicular to the optical axis.

14. The camera module of claim 13, wherein the elastic member further comprises:
a third elastic portion (353c) extending from the first fixing portion; and
a fourth fixing portion (351d) provided at an end portion of the third elastic portion and supported by the casing,
wherein the third elastic portion is configured to allow or guide movement of the first carrier on a plane perpendicular to the optical axis relative to the casing.

15. The camera module of claim 14, further comprising:
a second damping member (431a) disposed between a portion of the third elastic portion and the first carrier,
wherein the portion of the third elastic portion is supported on the first carrier via the second damping member.
